# EUROPEAN PATENT APPLICATION

(11) **EP 3 637 221 A1**
(43) Date of publication of application: **15.04.2020**
(21) Application number: 18199706.5
(22) Date of filing: 10.10.2018
(51) Int. Cl.: G06F 1/16

(54) **PORTABLE ELECTRONIC DEVICE HOUSINGS INCLUDING CORNER BRACES**

(71) Applicant: SABIC Global Technologies B.V., 4612 PX Bergen op Zoom (NL)
(72) Inventor: PARAMESHWARA, Arunachala, 4612 PX Bergen op Zoom (NL); KARTHIKEYAN, Rajkumar, 4612 PX Bergen op Zoom (NL); HOCKER, Thomas, 4612 PX Bergen op Zoom (NL); KULKARNI, Sandeep Chandrakant, 4612 PX Bergen op Zoom (NL)
(74) Representative: J A Kemp LLP

(57) **Abstract**

This disclosure includes PED housings. Some housings include a planar portion having a periphery, a sidewall that projects from the periphery to define corner(s), in each of which a linear first portion of the sidewall is disposed along the periphery in a first direction, a linear second portion of the sidewall is disposed along the periphery in a second direction that is coplanar with and angularly disposed relative to the first direction, and a corner portion of the sidewall connects the first and second sidewall portions, and, for at least one of the corner(s), a corner brace disposed inside of the corner and connected to each of the first and second sidewall portions and the planar portion, wherein the height of the corner brace, measured perpendicularly to the planar portion, decreases along a third direction that is coplanar with and equiangularly disposed relative to the first and second directions.

## Description

### FIELD OF INVENTION

The present invention relates generally to portable electronic device (PED) housings, and more particularly, to PED housings having corner braces and/or reinforcement inserts with connecting portions for connecting the inserts to a body of the housing.

### BACKGROUND

Smart phones, tablets, and other PEDs play a vital role in an ever-growing digital society. Their prevalence may be due, in part, to their ability to perform tasks previously relegated to desktop and laptop computers, while being mobile.

Because of their frequent mobile use, PEDs are more susceptible to being dropped than non-portable electronic devices. When dropped, PEDs are vulnerable to damage caused by an impact with a hard surface, such as the ground. Such damage to PEDs may be costly to repair. To protect against such damage, PED housings should be relatively strong and durable. PED housings should also, however, be relatively light, easy to manufacture, inexpensive, and have good radiofrequency ("RF") transparency to facilitate signal receiving and transmitting. These are sometimes competing interests.

Current solutions for PED housings include monolithic metal designs as well as those that include metal that is overmolded, adhered, or otherwise bonded to a plastic material. Such designs, while potentially strong enough to mitigate PED damage, may be undesirably heavy, expensive, and/or may have undesirably low RF transparency.

### SUMMARY

There is a need for PED housings that address these requirements. Some of the present PED housings include corner braces. And, some of the present PED housings include an insert that is coupled to a body of the housing, where the body extends further over the insert at one or more corners of the PED housing than at other portions of the housing. In either or both of these ways, some such PED housings may be all-plastic, may include a fiber-reinforced laminate, may possess sufficient strength to mitigate PED damage, and/or may have a lower weight and/or higher RF transparency than conventional PED housings.

The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "substantially" is defined as largely but not necessarily wholly what is specified (and includes what is specified; e.g., substantially 90 degrees includes 90 degrees and substantially parallel includes parallel), as understood by a person of ordinary skill in the art. In any disclosed embodiment, the term "substantially" or "approximately" can be substituted with "within [a percentage] of' what is specified, where the percentage includes .1, 1, 5, and 10 percent.

The phrase "and/or" means and or or. To illustrate, A, B, and/or C includes: A alone, B alone, C alone, a combination of A and B, a combination of A and C, a combination of B and C, or a combination of A, B, and C. In other words, "and/or" operates as an inclusive or.

The terms "comprise" (and any form of comprise, such as "comprises" and "comprising"), "have" (and any form of have, such as "has" and "having"), and "include" (and any form of include, such as "includes" and "including") are open-ended linking verbs. As a result, an apparatus that "comprises," "has," or "includes" one or more elements possesses those one or more elements, but is not limited to possessing only those one or more elements. Likewise, a method that "comprises," "has," or "includes" one or more steps possesses those one or more steps, but is not limited to possessing only those one or more steps.

Any embodiment of any of the apparatuses, systems, and methods can consist of or consist essentially of - rather than comprise/have/include - any of the described steps, elements, and/or features. Thus, in any of the claims, the term "consisting of' or "consisting essentially of' can be substituted for any of the open-ended linking verbs recited above, in order to change the scope of a given claim from what it would otherwise be using the open-ended linking verb.

Further, a device or system that is configured in a certain way is configured in at least that way, but it can also be configured in other ways than those specifically described.

The feature or features of one embodiment may be applied to other embodiments, even though not described or illustrated, unless expressly prohibited by this disclosure or the nature of the embodiments.

Some details associated with the embodiments are described above, and others are described below.

### BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers. Each of the figures, unless identified as a schematic view, is drawn to scale, meaning the sizes of the elements depicted in the figure are accurate relative to each other for at least the embodiment depicted in the figure.

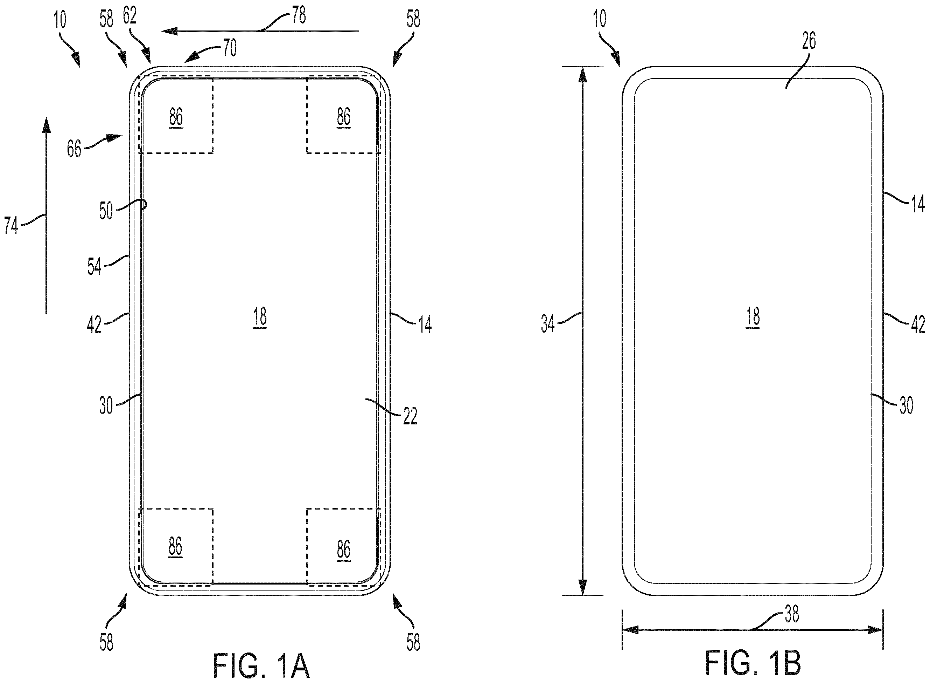

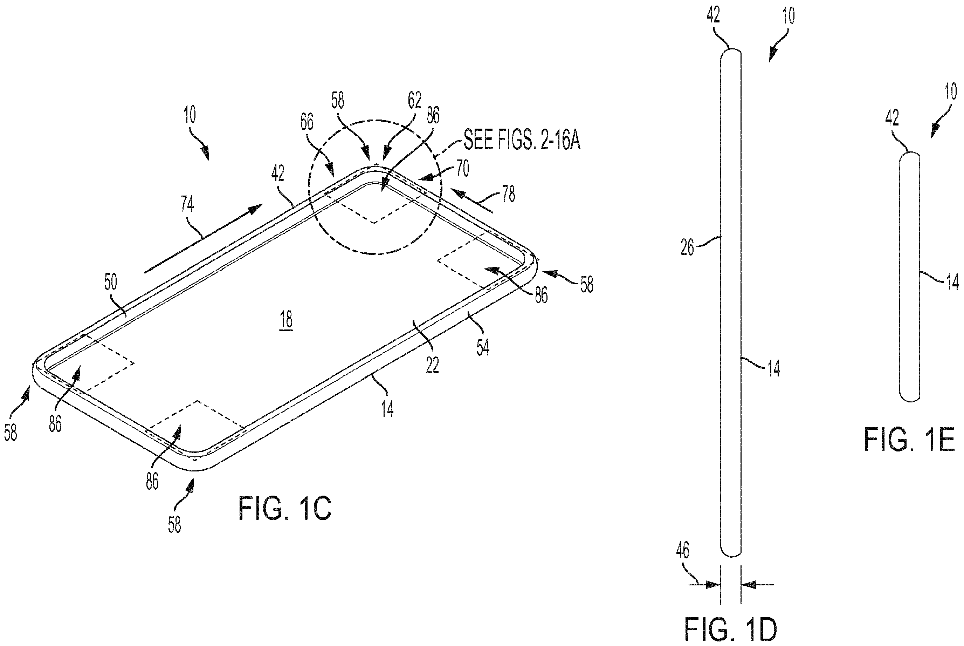

**FIG. 1A** is a front view of one of the present housings that includes a planar portion and a sidewall that projects from the periphery of the planar portion to define one or more corners.
**FIGs. IB-IE** are back, perspective, side, and end views, respectively, of FIG. 1A's housing.
**FIGs. 2A-2D****,** **3A-3D****,** **4A-4D****,** **5A-5D****,** **6A-6D****,** **7A-7D****,** **8A-8D****,** **9A-9D****,** **10A-10D****,**
**11A-11D****,** **12A-12D****,** **13A-13D****,** **14A-14D****,** **15A-15D****,** and **16A-16D** each depict a corner brace that may be suitable for use in one or more of the corner(s) of FIG. 1A's housing.
**FIG. 17A** is a front view of one of the present housings, which includes an insert (e.g., fiber-reinforced or otherwise) and a frame that is coupled to the insert, the frame having a sidewall that defines one or more corners.
**FIGs. 17B-17E** are back, perspective, side, and end views, respectively, of FIG. 17A's housing.
**FIG. 18A** is a schematic view of a layup of a laminate that may be suitable for use as an insert in some of the present housings.
**FIGs. 18B** and **18C** are schematic views of laminae that may be suitable for use in inserts in some of the present housings.
**FIGs. 19A-19C****,** **20A-20C****,** and **21A-21C** each depict a connecting portion that may be suitable for connecting the sidewall to the insert in FIG. 17A's housing.

### DETAILED DESCRIPTION

Referring specifically to FIGs. 1A-1E, shown therein is an exemplary embodiment 10 of the present portable electronic device (PED) housings. As shown, housing 10 includes a body 14. Body 14 can be a back panel of the housing such that, for example, when the body is coupled to a front panel of the housing (which can be a screen and/or a frame therefore), the body and the front panel cooperate to define an interior volume within which PED components, such as, for example, one or more processors, memories, boards, screens, user-input devices, batteries, other devices (e.g., cameras), and/or the like, can be disposed. Notwithstanding the above, body 14 itself can be characterized as a housing. Body 14 can be formed in any suitable manner, such as, for example, by overmolding, compression molding, injection molding, and/or the like (e.g., body 14 can comprise any of the thermoplastic or thermoset materials described below).

As shown, body 14 can include a planar portion 18. Planar portion 18 can include a first surface 22 and a second surface 26 opposite the first surface. In the embodiment shown, each of first surface 22 and second surface 26 are planar. In some embodiments, at least one of a first surface (e.g., 22) and a second surface (e.g., 26) of a planar portion (e.g., 18) can comprise one or more structural supports (e.g., ribs) coupled to the planar portion to increase the structural integrity of its housing (e.g., 10). Planar portion 18 comprises a periphery 30. Periphery 30 of planar portion 18 can define any suitable shape, such as, for example, a triangular, square, rectangular, or otherwise polygonal shape, whether having rounded or sharp corners.

Body 14 can have any suitable length 34 and any suitable width 38 (measured perpendicularly to the length) (FIG. 1B). To illustrate, length 34 can be greater than or approximately equal to any one of, or between any two of: 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or 3.0 times width 38; for example, the ratio of the length to the width can be approximately 3:2, 4:3, 5:3, 5:4, 16:9, or 16:10. A non-limiting value for length 34 is one that is greater than or approximately equal to any one of, or between any two of: 50, 60, 70, 80, 90, 100, 120, 140, 160, 180, 200, 220, 240, 260, 280, 300, 350, 400, 450, 500, 550 or 600 mm (e.g., approximately 150 mm). And, a non-limiting value for width 38 is any one specified for length 34 (e.g., approximately 75 mm).

Body 14 includes a sidewall 42 that projects from periphery 30 such that, for example, the sidewall surrounds-though not necessarily completely-planar portion 18 of the body. Sidewall 42 and planar portion 18 can cooperate to define a thickness 46 of body 14. Body 14 can have any suitable thickness 46, such as, for example, approximately equal to any one of, or between any two of: 5.0, 6.0, 7.0, 8.0, 9.0, 10.0, 11.0, 12.0, 13.0, 14.0, or 15.0 mm.

As shown, sidewall 42 projects from periphery 30 on a side of planar portion 18 having first surface 22. Sidewall 42 comprises an inner surface 50 on a side of the sidewall facing planar portion 18 of body 14 and an outer surface 54 opposite the inner surface of the sidewall. At least a portion of outer surface 54 of sidewall 42 can be rounded, such as, for example, convex or concave. In some embodiments, at least a portion of an outer surface (e.g., 54) of a sidewall (e.g., 42) is planar. As shown, at least a portion of inner surface 50 of sidewall 42 can be planar. In some embodiments, at least a portion of an inner surface (e.g., 50) of a sidewall (e.g., 42) can be rounded, such as, for example, convex or concave.

Sidewall 42 projects from periphery 30 to define one or more corners 58. In each corner 58, a corner portion 62 of sidewall 42 connects a first portion 66 of the sidewall to a second portion 70 of the sidewall. First portion 66 of sidewall 42 and/or second portion 70 of the sidewall can extend along periphery 30 in such a way to define one or more linear and/or non-linear segments.

First portion 66 of sidewall 42 is disposed along periphery 30 in a first direction 74 that extends toward corner portion 62 (e.g., depicted in FIG. 1A in relation to the upper left-hand corner 58). Second portion 70 of sidewall 42 is disposed along periphery 30 in a second direction 78 that extends toward corner portion 62 (e.g., depicted in FIG. 1A in relation to the upper left-hand corner 58). As shown, second direction 78 is coplanar with and angularly disposed relative to first direction 74. To illustrate, first direction 74 and second direction 78 can be disposed at any suitable angle relative to each other, such as, for example, approximately any one of, or between approximately any two of the following: 40, 50, 60, 70, 80, 85, 90, 95, 100, 110, 120, 130, and 140 degrees, where that angle is measured between first direction 74 and second direction 78.

Sidewall 42 can be configured such that it defines any suitable number of corners 58, such as, for example, one, two, three, four, five, six, or more corners.

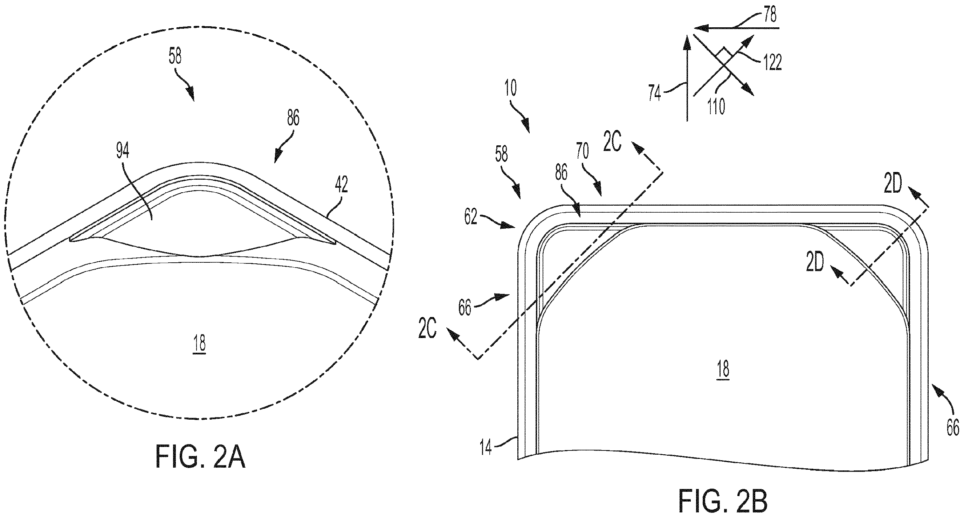

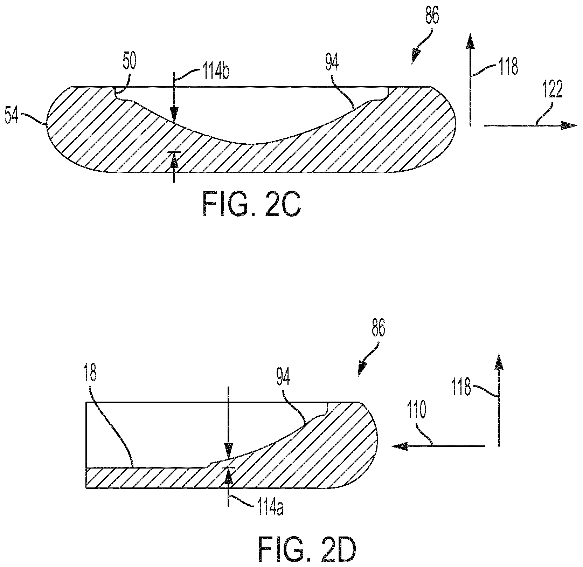

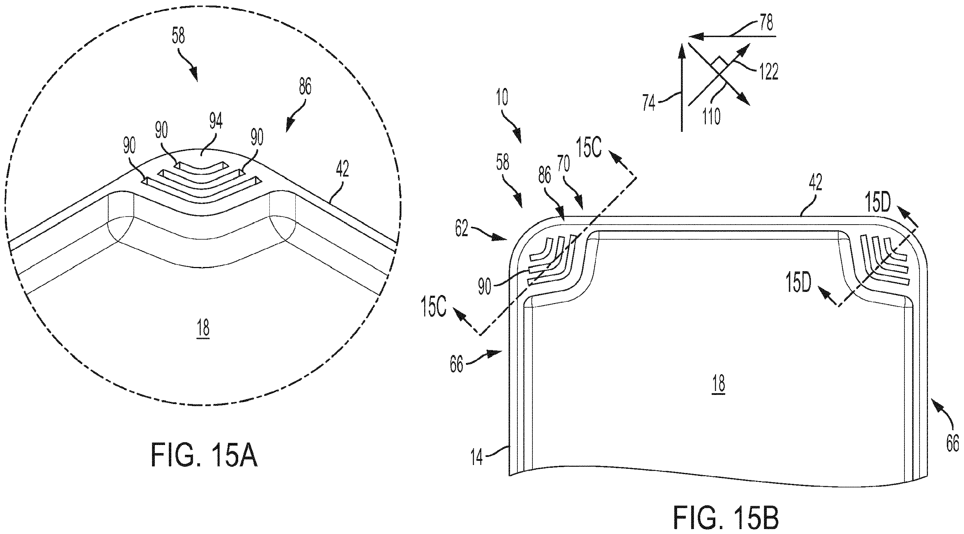

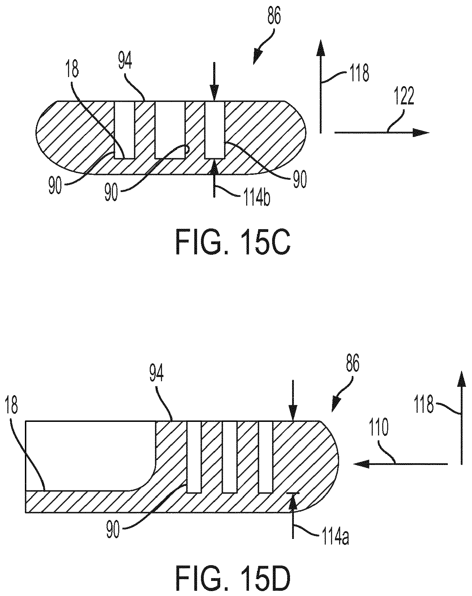

As shown in FIGs. 1A and 1C, for or at least one (e.g., two, three, four, or more, including all) of corners 58, body 14 includes a corner brace 86. Body 14 can include any suitable corner braces (e.g., any one or more of those shown in FIGs. 2A-16D and described below) in any suitable combination and configuration.

Corner brace 86 is configured to increase the strength and durability of housing 10 and protect the housing against damage caused by an impact from dropping the housing, especially when the impact occurs at or near one of corners 58 of the housing. For example, the present corner braces (e.g., 86) can provide additional structural support to sidewall 42 such that the corner braces resist deformation at or near corner portion 62, first sidewall portion 66, and/or second sidewall portion 70 as a result of an impact at or near one of corners 58. The present corner braces (e.g., 86) are relatively light in comparison to the added impact protection.

Corner brace 86 is disposed inside of corner 58 (i.e., along inner surface 50 of sidewall 42). Corner brace 86 is connected to at least one of, such as, for example, each of, first sidewall portion 66, second sidewall portion 70, and corner portion 62. For example, for at least one of corners 58, corner brace 86 is unitary with at least one of first sidewall portion 66, second sidewall portion 70, and corner portion 62. As shown in FIGs. 2A-15D, corner brace 86 can be connected to (e.g., unitary with) planar portion 18 of body 14.

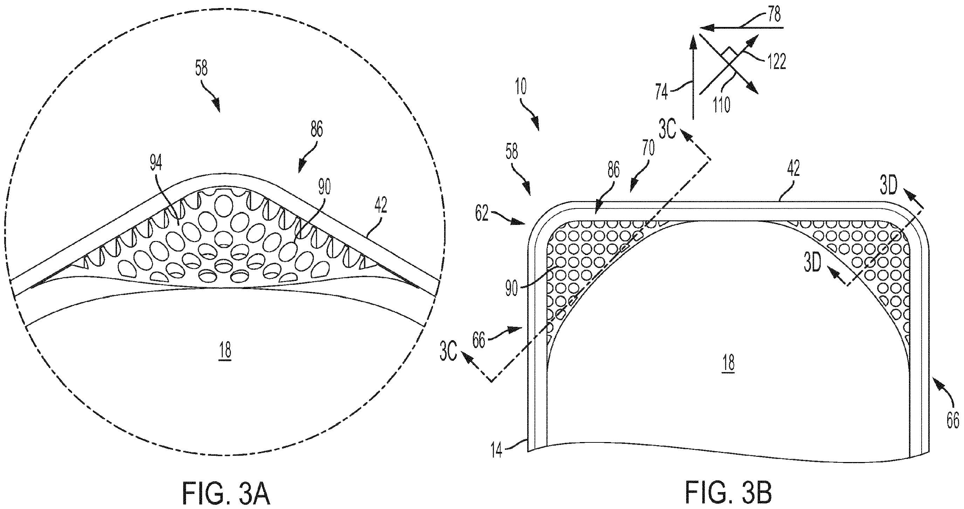

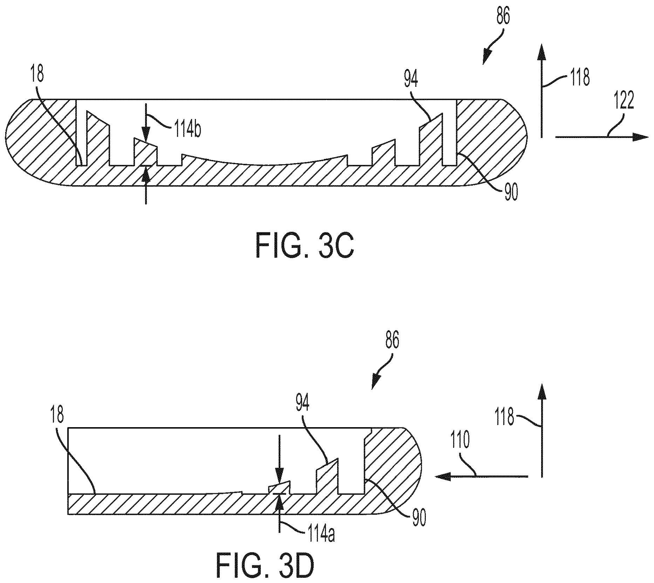

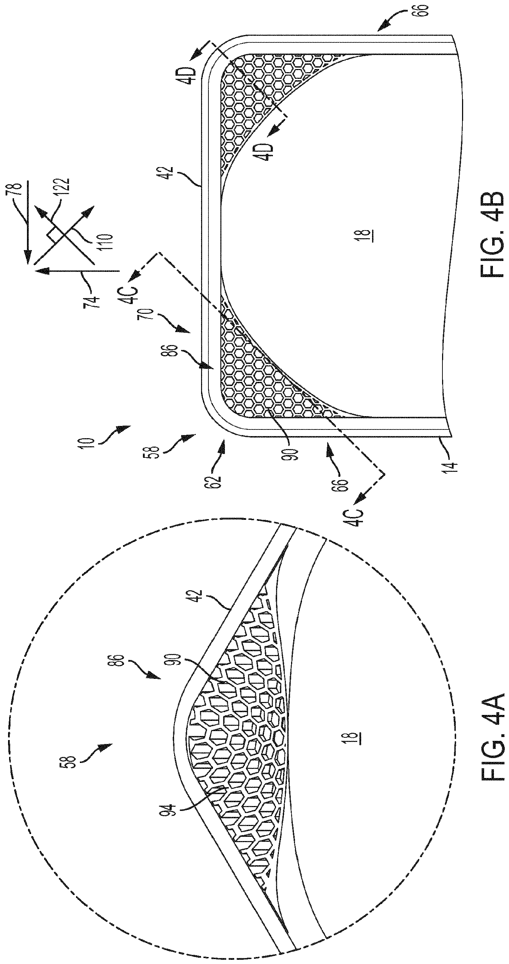

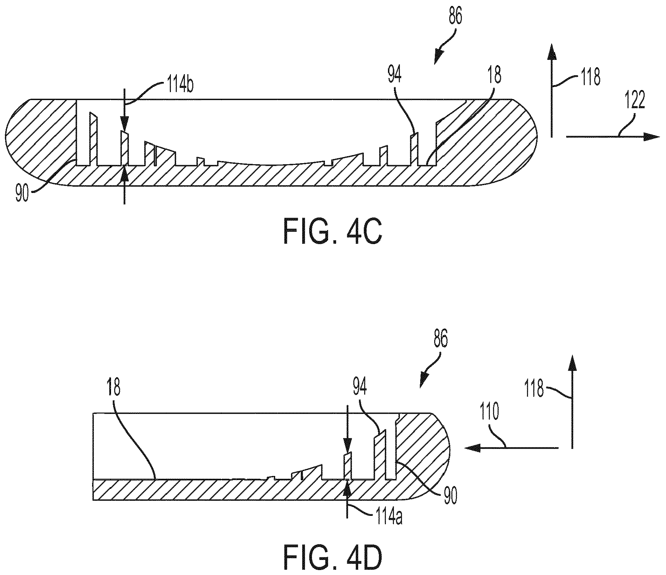

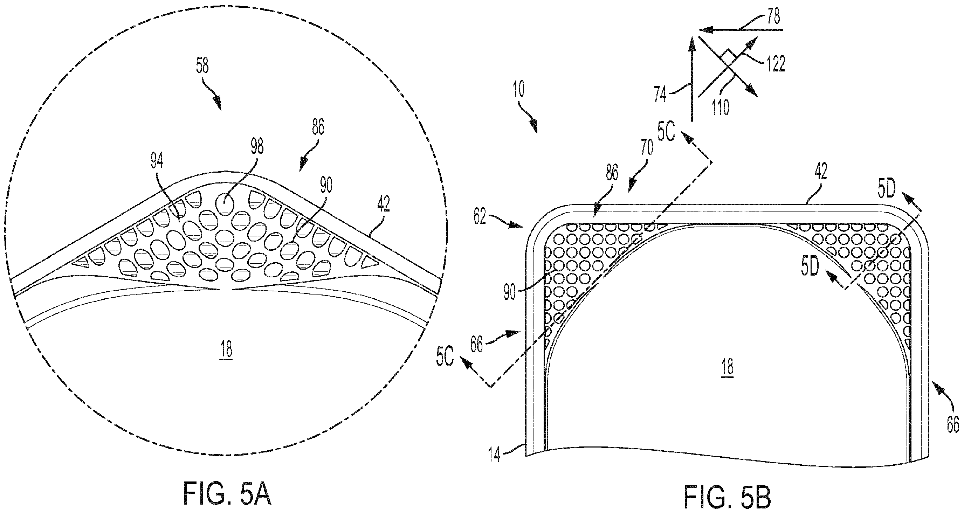

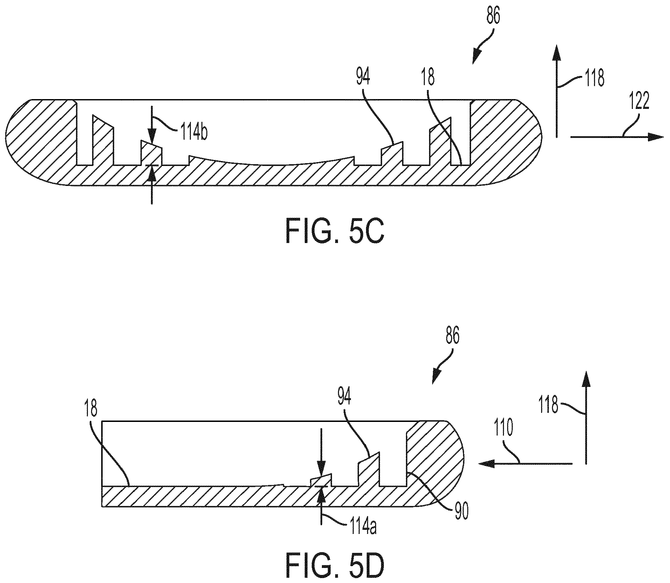

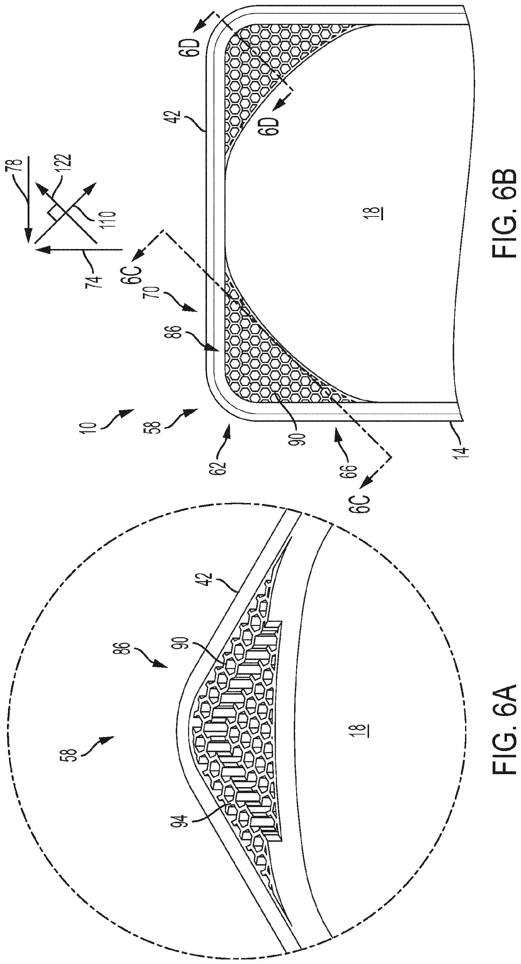

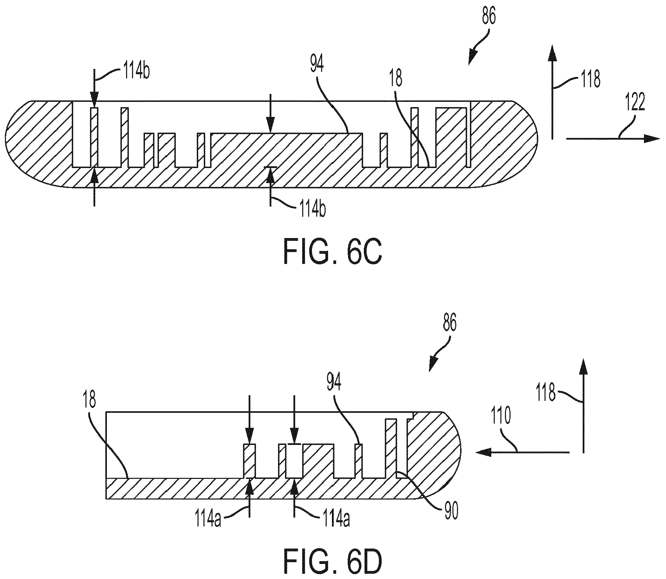

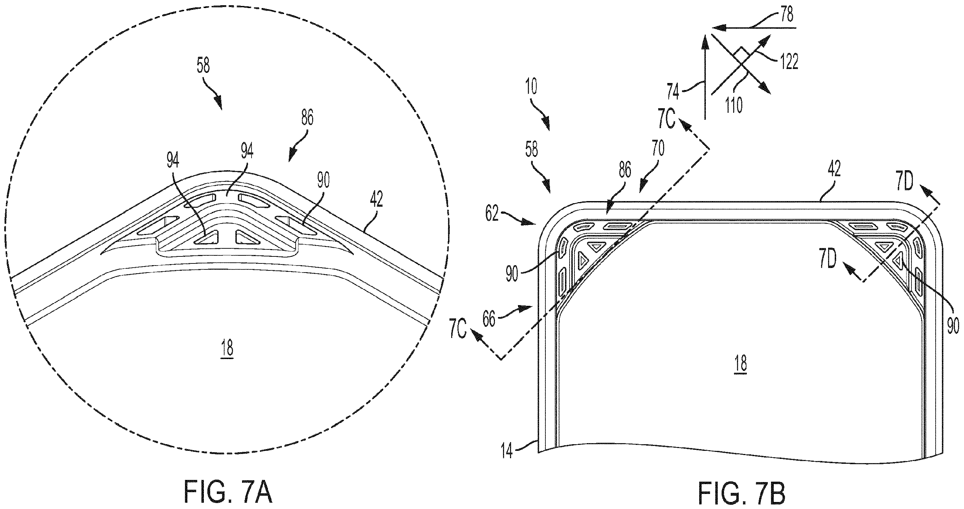

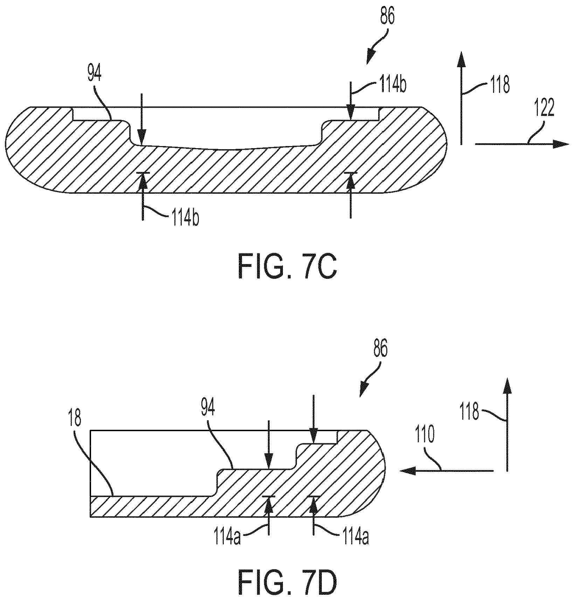

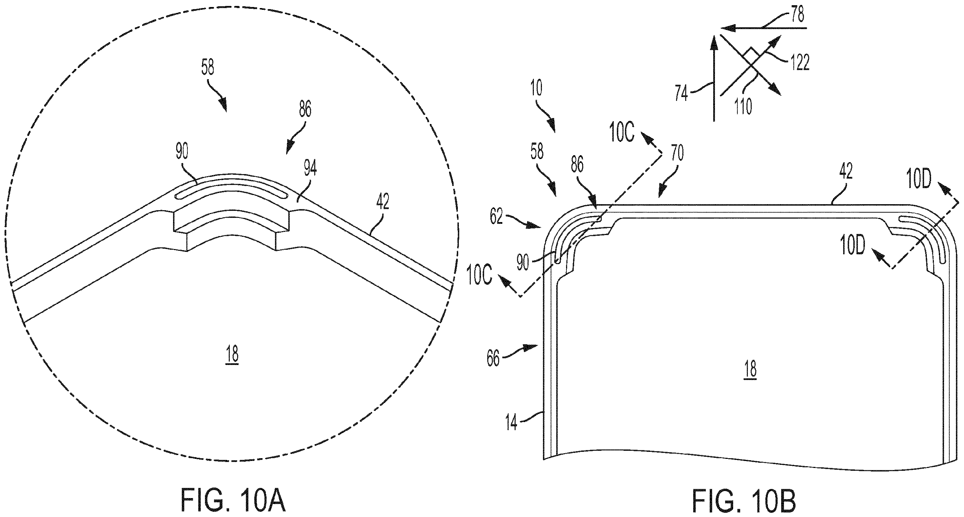

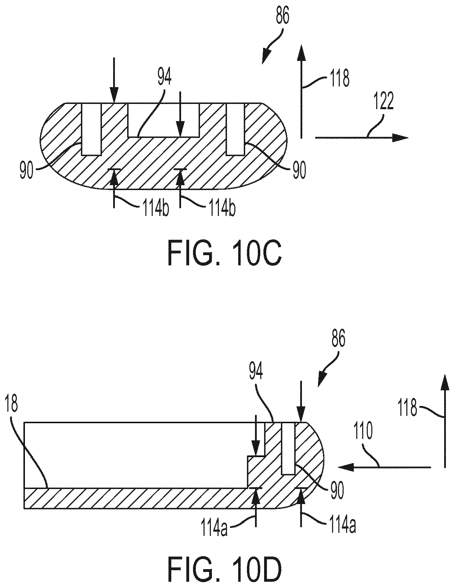

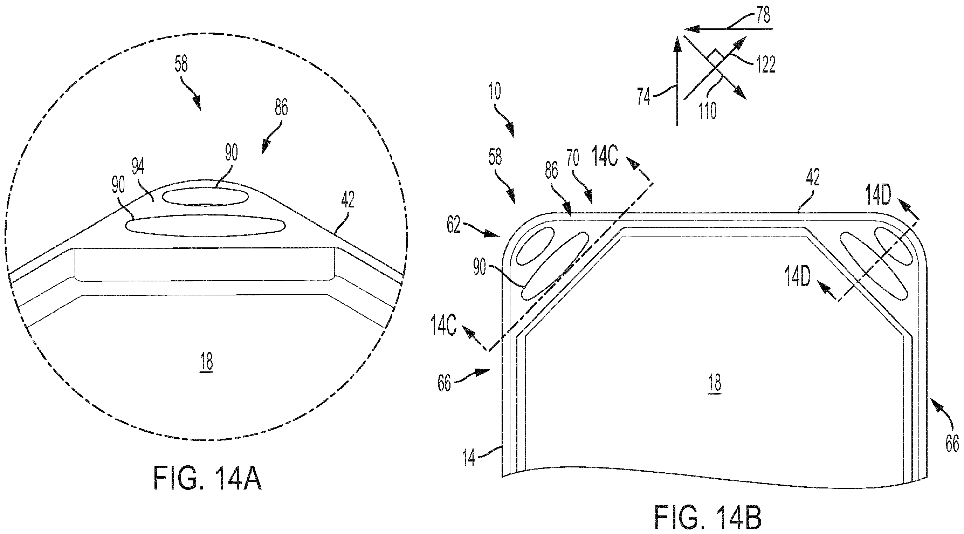

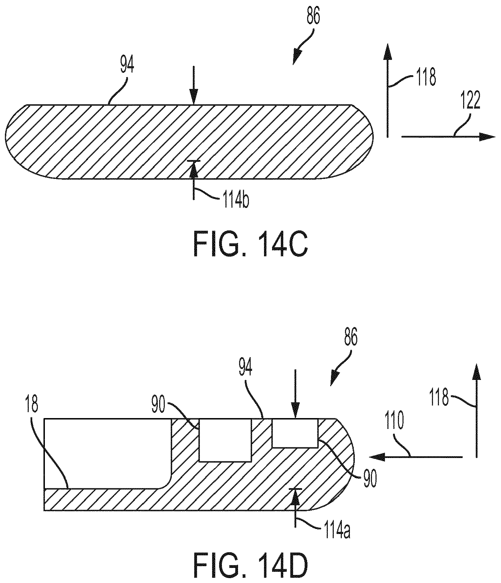

As shown in FIGs. 2A-2D, 9A-9D, 11A-11D, and 12A-12D, for at least one of corners 58, corner brace 86 can be solid (i.e., the corner brace does not comprise openings (e.g., 90), recesses (e.g., 104) and/or the like). In comparison, referring particularly to FIGs. 3A-7D, 10A-10D, and 13A-15D, for at least one of corners 58, corner brace 86 defines one or more openings 90. At least one of openings 90 includes a perimeter, taken parallel to planar portion 18, that is circular (e.g., FIGs. 3B and 5B), ovular (e.g., FIG. 14B), or otherwise rounded (e.g., FIGs. 7B, 10B, 13B, and 15B), or triangular (e.g., FIG. 7B), rectangular, hexagonal (e.g., FIGs. 4B and 6B), or otherwise polygonal (e.g., FIG. 7B). As illustrated in FIGs. 3-6D and 15D, at least one of openings 90 can extend from an outer surface 94 of corner brace 86 to planar portion 18 of body 14. In contrast, as shown in FIGs. 10D, 13D, and 14D, at least one of a plurality of openings 90 extends from outer surface 94 toward, but not all the way to, planar portion 18. One or more openings 90 can each have any suitable material 98 disposed within the opening to increase the strength of body 14. For example, as shown in FIG. 5A, housing 10 can comprise an elastomeric material 98 disposed within at least one of openings 90. Elastomeric material 98 can be introduced into one or more openings 90 using any suitable manufacturing technique and/or method, such as, for example, injection molding, over-molding, and/or the like. Suitable examples of such an elastomeric material include ethylene propylene diene monomer (EPDM), natural rubber (polyisoprene), sbr (styrene-butadiene-rubber), butylrubber, polyurethane (au, eu), neoprene cr (polychloroprene), hydrogenated nitrile (hnbr hsn), hypalon chlorosulphonated polyethylene (csm), nitrile (nbr), acrylic acm (alkyl acrylate copolymer), vamac, silicone rubber, viton, fluorosilicone (fvmq), fluorocarbon (fvmq), fluorocarbon (fkm), aflas (tetrafluoroethylene-propylene), and/or the like.

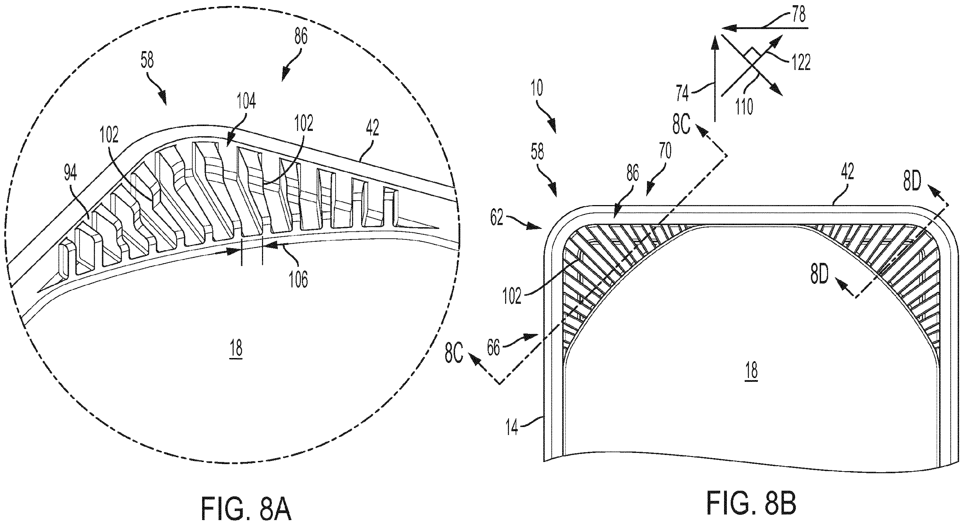

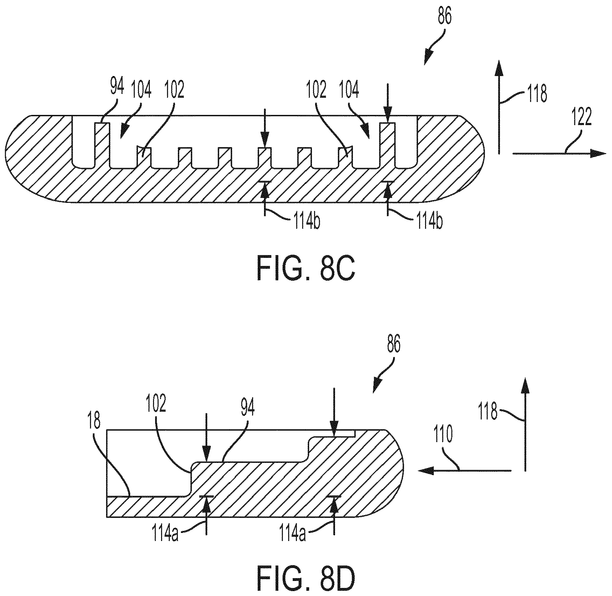

As shown in FIGs. 8A-8D, for at least one of corners 58, corner brace 86 can comprise one or more ribs 102. To illustrate, at least one of ribs 102 can be defined by a protrusion that extends from planar portion 18 and/or sidewall 42 of body 14. Between any two of ribs 102 is a recess 104. The minimum distance 106 between any two of ribs 102 can be approximately one of or between approximately any two of the following: 0.5, 1.0, 1.5, 2.0, 2.5, 3.0, 3.5, 4.0, 4.5, and 5.0 mm. As shown in FIG. 8B, at least a portion of at least one of ribs 102 can extend linearly along planar portion 18. In some embodiments, at least a portion of at least one of one or more ribs (e.g., 102) extends non-linearly along a planar portion (e.g., 18) of a body (e.g., 14). As shown in FIG. 8B, at least one of ribs 102 can be configured to extend from first sidewall portion 66, second sidewall portion 70, and/or corner portion 62 of sidewall 42 along a direction that is substantially parallel to or angularly disposed relative to a third direction 110, which is coplanar with and equiangularly disposed relative to first direction 74 and second direction 78.

Each corner brace 86 comprises a height (e.g., 114a and 114b), which is measured as the greatest distance from planar portion 18 along a fourth direction 118 that is normal to the planar portion. Height 114a of each corner brace 86 can be described relative to how the height changes along third direction 110. Height 114b of each corner brace 86 can be described relative to how the height changes along a fifth direction 122, which is coplanar with and perpendicular to third direction 110. As used herein, heights 114a and 114b are measured without accounting for features such as recesses (e.g., 104), openings (e.g., 90), fillets, and/or the like.

Referring particularly to FIGs. 2A-12D, for each of one or more corners 58, height 114a of corner brace 86 decreases along third direction 110 (e.g., as it extends away from corner portion 62 of sidewall 42). Height 114a of corner brace 86 along third direction 110 may exhibit any suitable slope and/or change in slope (relative to the axes defined by the third direction and fourth direction 118) as it decreases along the third direction.

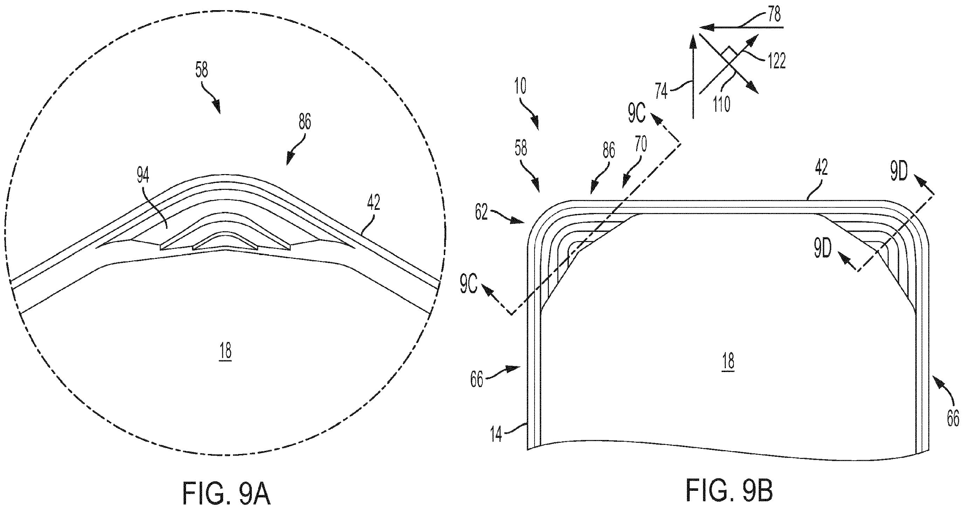

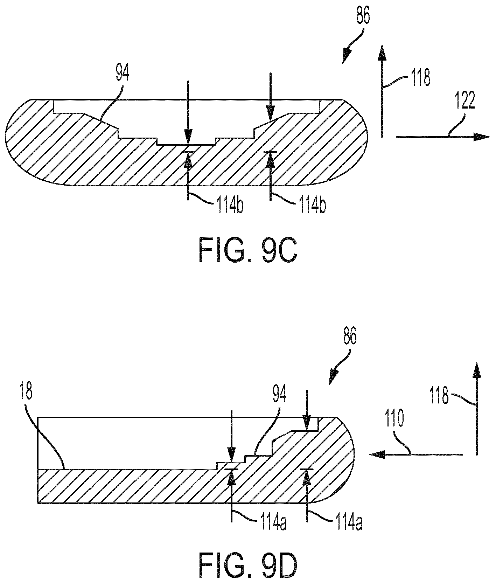

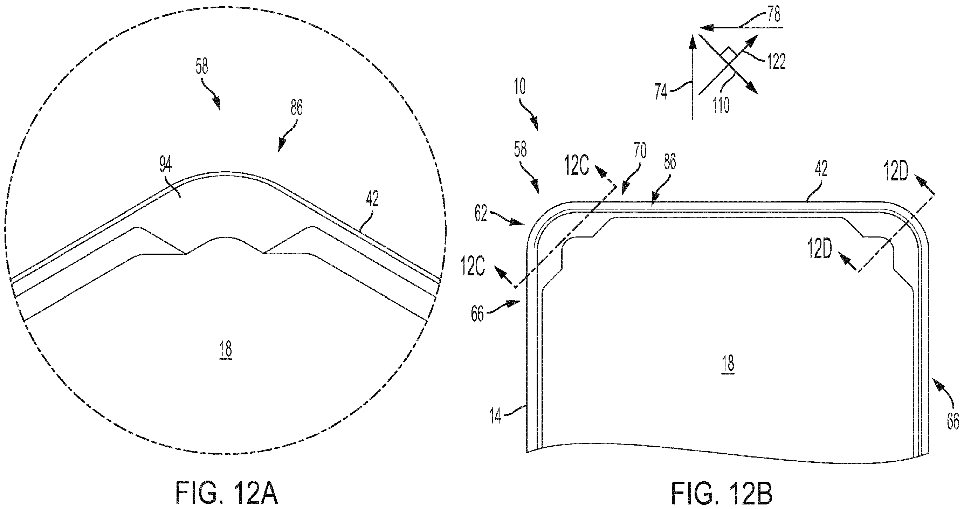

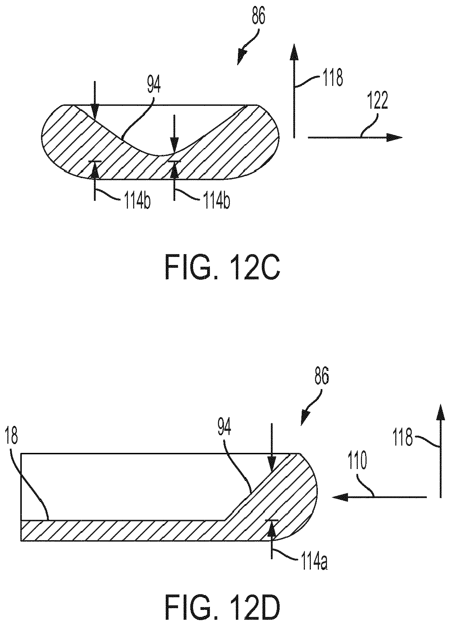

To illustrate, as shown in FIGs. 2A-5D, for each of at least one of corners 58, height 114a of corner brace 86 decreases and exhibits a non-linear slope along third direction 110. To further illustrate, as shown in FIGs. 9D and 12D, for each of at least one of corners 58, height 114a of at least one corner brace 86 decreases and at least a portion of the height exhibits a non-zero linear slope along third direction 110. As shown in FIGs. 6A-11D, at least a portion of the slope of height 114a of corner brace 86 is stepped as it decreases along third direction 110.

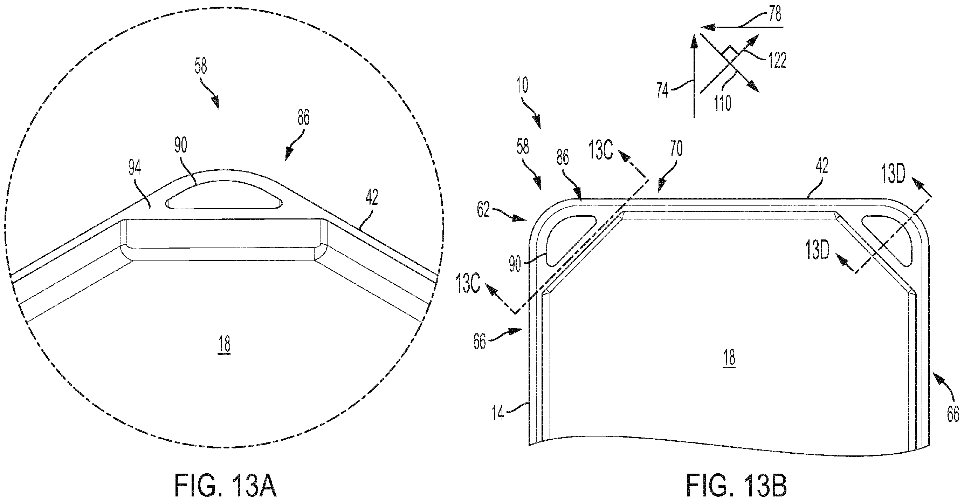

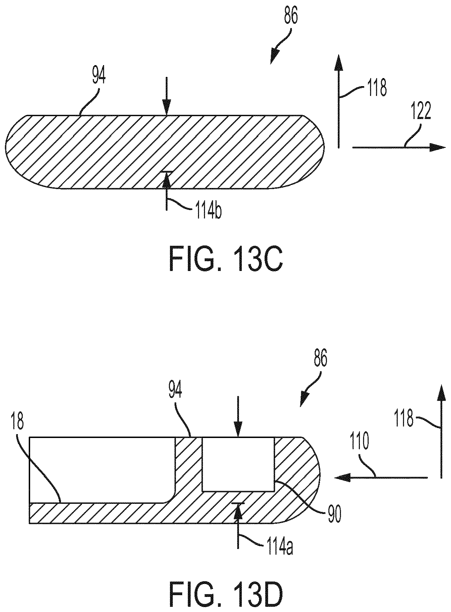

Referring specifically to FIGs. 13A-15D, height 114a of at least one corner brace 86 is substantially uniform (e.g., exhibits substantially no change in slope) along third direction 110. For example, height 114a of at least one corner brace 86 can be equal to a height of at least a portion of sidewall 42 (e.g., first sidewall portion 66, second sidewall portion 70, and/or corner portion 62). In some embodiments, a height (e.g., 114a) of at least one corner brace (e.g., 86) is substantially uniform and less than a height of a sidewall (e.g., 42), such as, for example, 95, 90, 85, 80, 75, 70, 65, 60, 55, 50 or less percent of the height of the sidewall.

Corner brace 86 can be configured such that the slope (relative to axes defined by fourth direction 118 and fifth direction 122) of height 114b along the fifth direction is linear, non-linear, stepped, or some combination thereof. For example, as shown in FIGs. 2A-10C and 12C, for each of at least one of corners 58, height 114b of corner brace 86 decreases and then increases along fifth direction 122. To illustrate, in FIGs. 2A-5C, height 114b of corner brace 86 exhibits a non-linear slope as it decreases and a non-linear slope as it increases along fifth direction 122. In contrast, in FIG. 12C, height 114b of corner brace 86 exhibits a linear slope as it decreases and then a linear slope as it increases along fifth direction 122. As shown in FIGs. 6A-10C, height 114b of corner brace 86 can exhibit a stepped change as it decreases and then a stepped change as it increases along fifth direction 122. As shown in FIGs. 2A-5A, for at least one of corners 58, outer surface 94 of corner brace 86 is concave.

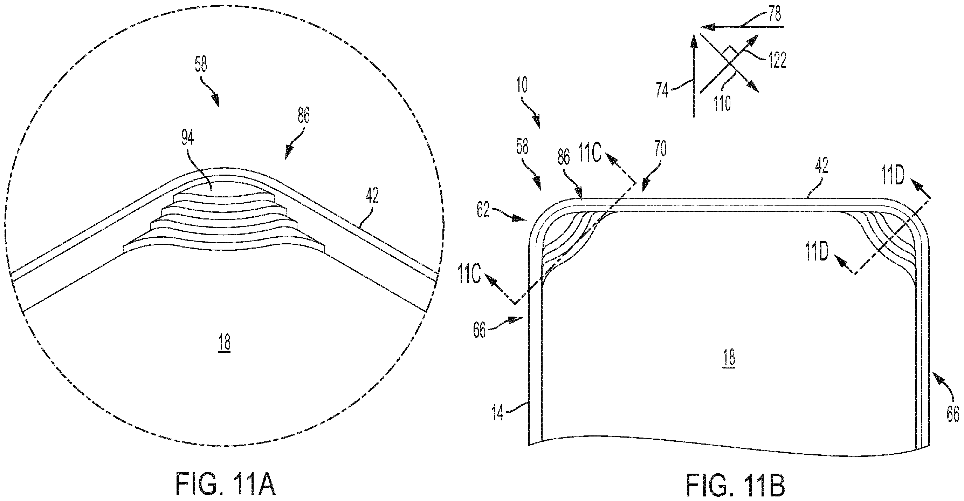

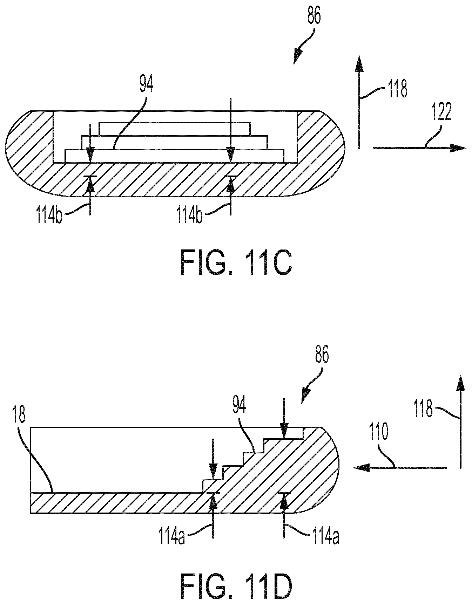

Referring additionally to FIGs. 11C and 13-15C, height 114b of a corner brace 86 can be substantially uniform (e.g., exhibits substantially no change in slope) along fifth direction 122. For example, height 114b of at least one corner brace 86 can be equal to a height of at least a portion of sidewall 42 (e.g., first sidewall portion 66, second sidewall portion 70, and/or corner portion 62). In some embodiments, a height (e.g., 114b) of at least one corner brace (e.g., 86) is substantially uniform and less than a height of a sidewall (e.g., 42), such as, for example, 95, 90, 85, 80, 75, 70, 65, 60, 55, 50 or less percent of the height of the sidewall.

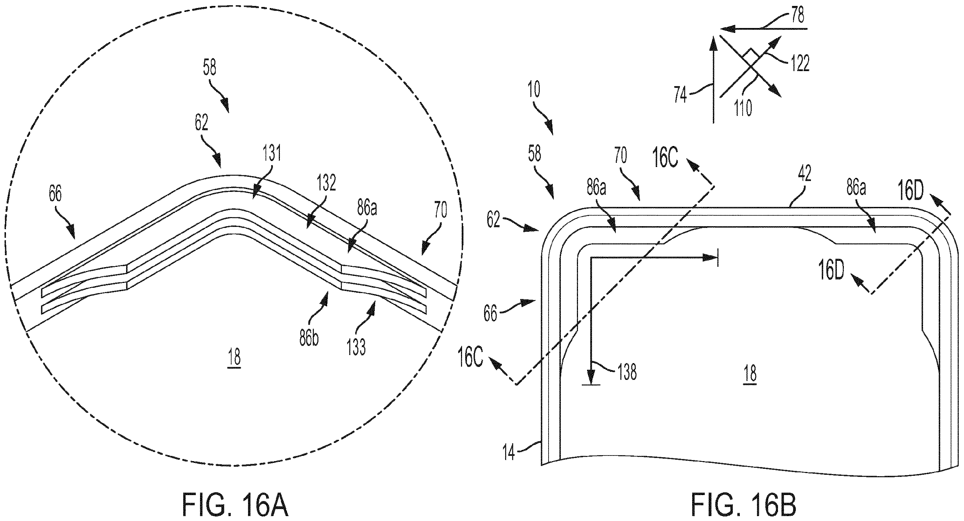

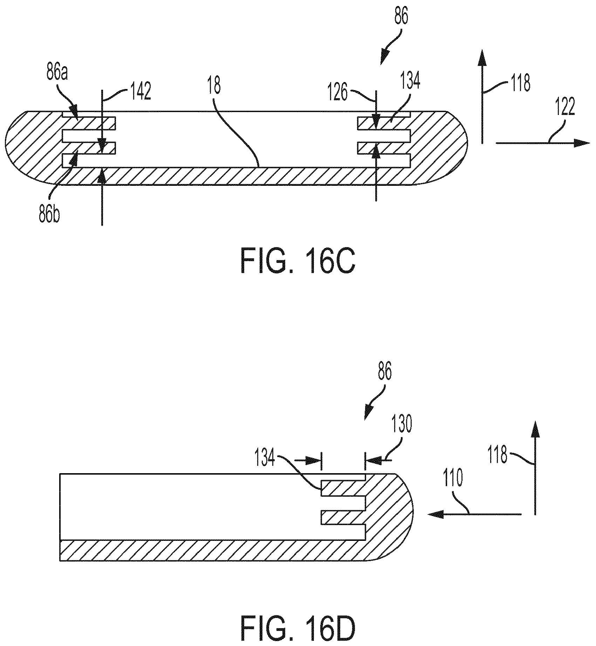

Referring specifically in FIGs. 16A-16D, for at least one of corners 58, body 14 can include a first corner brace 86a and a second corner brace 86b, each of which is disposed inside of the corner (i.e., along inner surface 50 of sidewall 42). As shown, first and/or second corner brace 86a, 86b are connected to at least one of, such as each of, first sidewall portion 66, second sidewall portion 70, and corner portion 62. For example, for at least one of corners 58, at least one of first corner brace 86a and second corner brace 86b is unitary with at least one of first sidewall portion 66, second sidewall portion 70, and corner portion 62.

At least one of first corner brace 86a and second corner brace 86b can comprise a projection that extends from at least one of first sidewall portion 66, second sidewall portion 70, and corner portion 62 of sidewall 42. For example, first corner brace 86a and second corner brace 86b can comprise a thickness 130 measured from sidewall 42 to an edge 134 of the respective corner brace, where the thickness is less than 25 percent (e.g., 25, 20, 15, 10, 5 or less percent) than a length 138 of the respective corner brace corner brace. As shown first and second corner braces 86a, 86b can each comprise one or more linear 132 or non-linear 131 segments and can include a tapered portion 133.

As shown in FIG. 16C, first corner brace 86a and second corner brace 86b can be spaced a distance 126 from one another in fourth direction 118 and spaced a distance 142 from planar portion 18 along the fourth direction. Each of distance 126 and distance 142 can be approximately any one of or between approximately any two of the following: 0.5, 1.0, 1.5, 2.0, 2.5, 3.0, 3.5, 4.0, 4.5, and 5.0 mm.

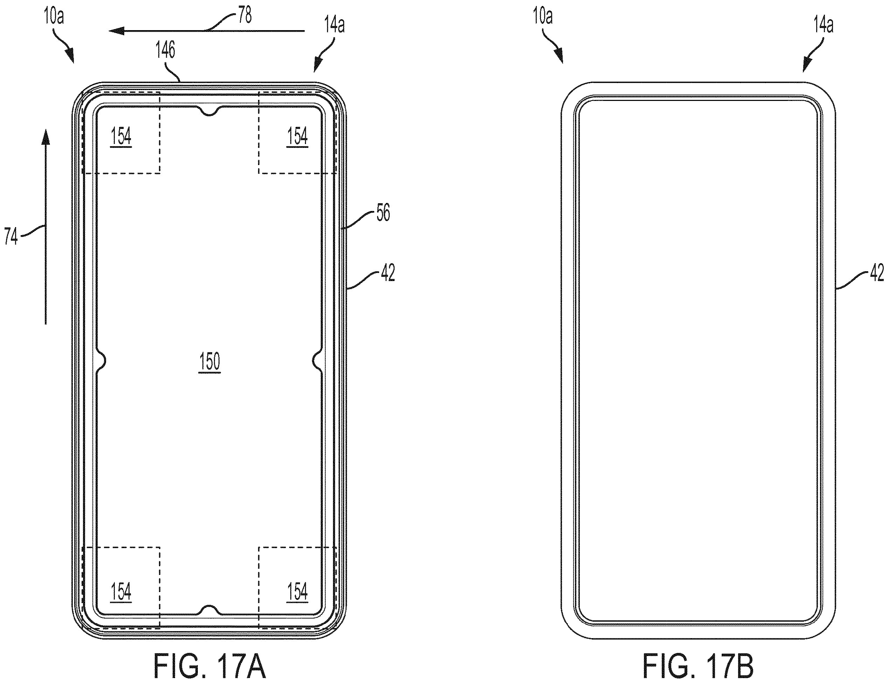

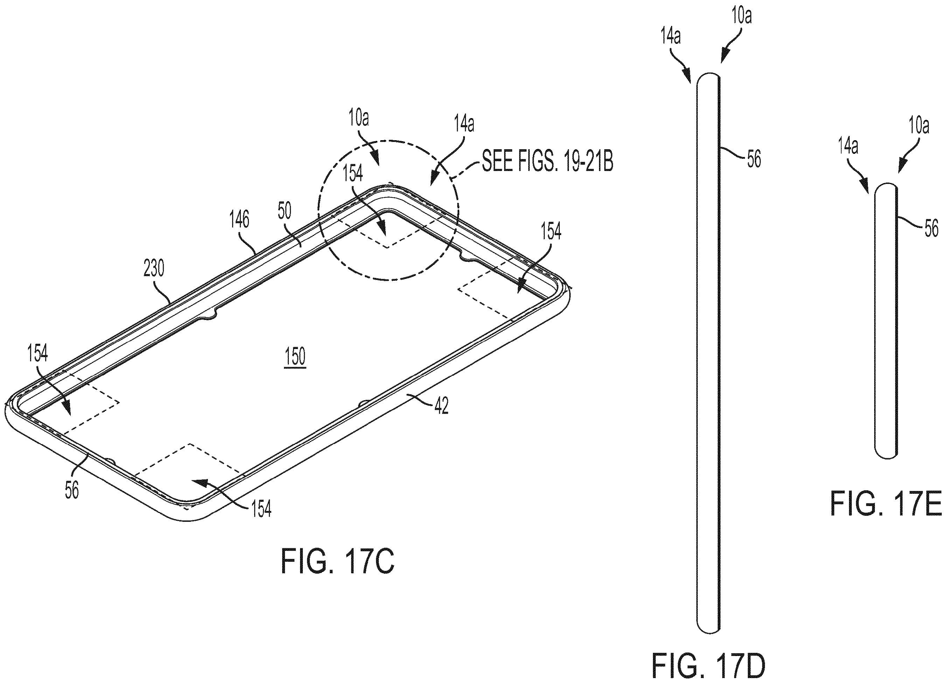

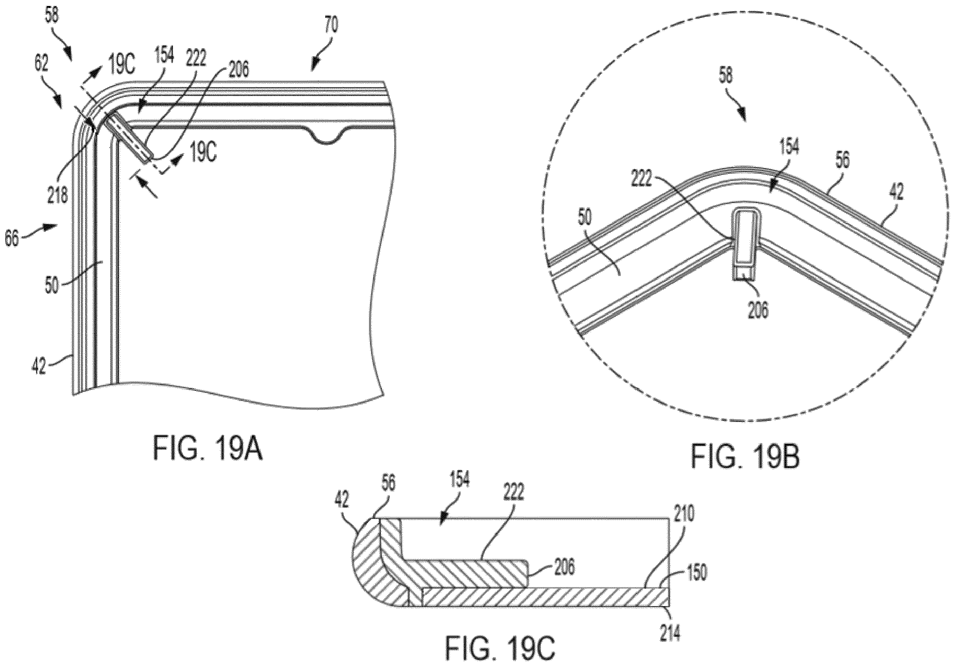

Referring now to FIGs. 17A-17E, shown is a second embodiment 10a of the present housings. As shown, housing 10a includes a body 14a that is substantially similar to body 14 with the exception that body 14a comprises a frame 146 having one or more connecting portions 154, each of which is configured to be connected to an insert 150 that defines at least a portion of planar portion 18 of body 14a. Body 14a can include any suitable connecting portions (e.g., any one or more of those shown in FIGs. 19A-21C and described below) in any suitable combination and configuration. Connecting portion 154 is disposed inside of corner 58 (i.e., along inner surface 50 of sidewall 42). Connecting portion 154 is connected to at least one of, such as, for example, each of, first sidewall portion 66, second sidewall portion 70, and corner portion 62. For example, for at least one of corners 58, connecting portion 154 is unitary with at least one of first sidewall portion 66, second sidewall portion 70, and corner portion 62.

Insert 150, when coupled to housing 10a, is configured to increase the strength and durability of the housing and protect against damage caused by an impact from dropping the housing. For example, the present inserts (e.g., 150) can provide additional structural support to body 14a such that the insert prevents deformation of the body (e.g., bending, torsional, and/or the like deformation) as a result of an impact at or near one of corners 58. Insert 150 is configured to be light relative to the added impact protection.

Insert 150 can comprise metal, such as, for example, steel, aluminum, and/or the like. For example, a metal insert (e.g., 150) can include one or more cladded materials to achieve the desired strength and/or durability characteristics.

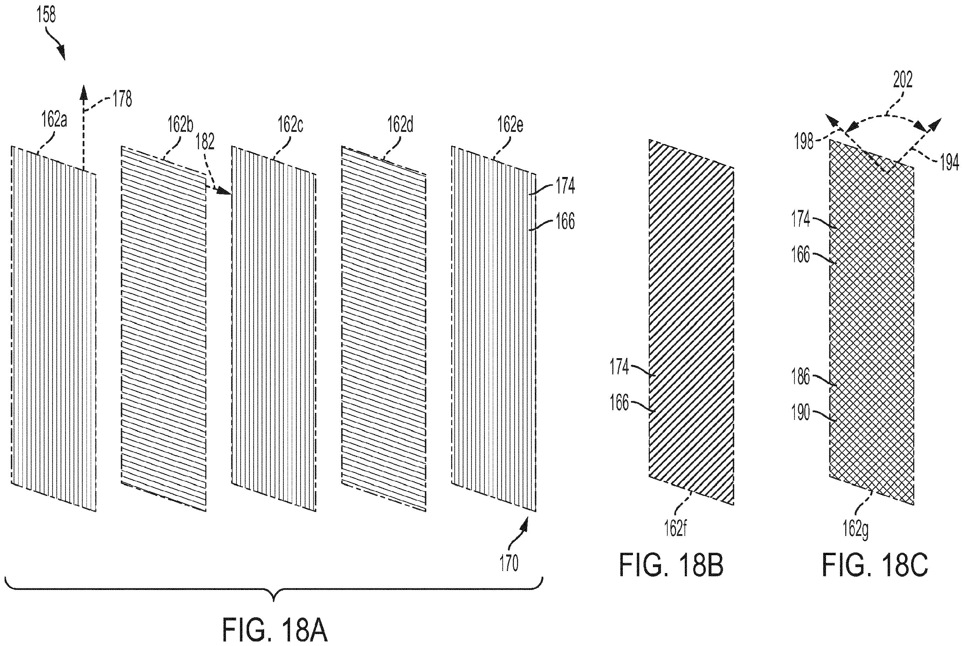

Referring to FIG. 18A, insert 150 can comprise a laminate 158 having one or more laminae 162, each of which comprises fibers dispersed within a matrix material (e.g., 166), such as, for example, a thermoplastic material or a thermoset material. Laminate 158 can include one or more laminae 162 that have been consolidated (e.g., heated and pressed together) such that the lamina(e) are bonded to one another. After such consolidation, even though the lamina(e) are bonded to one another, the lamina(e) are still referred to as lamina(e). To illustrate, FIG. 18 shows a layup 170 of laminae 162a-162e that can be consolidated to form laminate 158. Layup 170 includes five laminae; however, the present housings can comprise a laminate having any suitable number of lamina(e), such as, for example, 1, 2, 3, 4, 5, 6, 7, 8, 9, 10, 11, 12, 13, 14, 15, or more lamina(e).

In layup 170, each of laminae 162a-162e includes fibers 174 dispersed within a thermoplastic material 166. Fibers 174 can include any suitable fibers, such as, for example, carbon fibers, glass fibers, aramid fibers, polyethylene fibers, polyester fibers, polyamide fibers, ceramic fibers, bamboo fibers, jute fibers, hemp fibers, basalt fibers, steel fibers, and/or the like (e.g., glass fibers); fibers of each of the laminae need not be of the same type. Thermoplastic material 166 need not be the same for each of the laminae. Suitable examples of thermoplastic material 166 include polyethylene terephthalate (PET), polycarbonate (PC), polybutylene terephthalate (PBT), poly(1,4-cyclohexylidene cyclohexane-1,4-dicarboxylate) (PCCD), glycol-modified polycyclohexyl terephthalate (PCTG), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or a derivative thereof, a thermoplastic elastomer (TPE), a terephthalic acid (TPA) elastomer, poly(cyclohexanedimethylene terephthalate) (PCT), polyethylene naphthalate (PEN), a polyamide (PA), polysulfone sulfonate (PSS), polyether ether ketone (PEEK), polyether ketone ketone (PEKK), acrylonitrile butyldiene styrene (ABS), polyphenylene sulfide (PPS), a copolymer thereof, or a blend thereof (e.g., PP, PC, polyamide 6, or the like). Thermoplastic material 166 can include a filler, such as, for example, talc, calcium carbonate, discontinuous or short fibers (e.g., comprising any of the fiber-types described above), and/or the like, which can account for 10 to 70% of the thermoplastic material by weight.

A thermoset material (e.g., 166) can include, for example, an epoxy (e.g., bisphenyl A grades), melamine, silicone, formaldehyde grades, polyurethanes, structural foams, pDCPD (polydicyclopentadiene).

A lamina including fibers (e.g., 174) (e.g., any of lamina 162a-162e) can include any suitable pre-consolidation fiber volume fraction, such as, for example, one that is greater than or substantially equal to any one of, or between any two of: 30, 35, 40, 45, 50, 55, 60, 65, 70, 75, 80, 85, or 90% (e.g., between approximately 50% and approximately 70%).

In layup 170, each of laminae 162a-162e is a unidirectional lamina. More particularly, when layup 170 is placed flatly on a horizontal surface, fibers 174 of lamina 162a, 162c, and 162e can be aligned in a first direction 178, and fibers 174 of lamina 162b and 162d can be aligned in a second direction 182 that is angularly disposed relative to the first direction at an angle of approximately 90 degrees. Thus, when layup 170 is incorporated into housing 10a, fibers 174 of lamina 162a, 162c, and 162e can follow a first path (e.g., first direction 74, FIG. 17A) along the housing and fibers 174 of lamina 162b and 162d can follow a second path (e.g., second direction 78, FIG. 17A) along the housing that is angularly disposed relative to the first path at an angle of approximately 90 degrees (e.g., the laminate can be a 0,90 composite).

Referring additionally to FIG. 18B, some of the present housings can include a laminate that is formed from a layup having a unidirectional lamina 162f comprising fibers 174 that are aligned in any suitable direction. For example, when its layup is placed flatly on a horizontal surface, fibers 174 of lamina 162f can be angularly disposed relative to fibers 174 of other lamina(e) of the layup at any suitable angle relative to first direction 178, such as, for example, one that is greater than or approximately equal to any one of, or between any two of: 0, 5, 10, 15, 20, 25, 30, 35, 40, 45, 50, 55, 60, 65, 70, 75, 80, 85, or 90 degrees.

Referring additionally to FIG. 18C, some of the present housings can include a laminate that is formed from a layup including a woven lamina 162g, such as, for example, one in which fibers 174 are arranged in a plane, twill, satin, basket, leno, mock leno, or the like weave. For example, lamina 162g can include a first set of fibers 186 and a second set of fibers 190 that are woven with the first set of fibers. When its layup is placed flatly on a horizontal surface, fibers 186 of lamina 162g can extend in a first direction 194, and fibers 190 of the lamina can extend in a second direction 198 that is angularly disposed relative to the first direction. A smallest angle 202 between first direction 194 and second direction 198 can be greater than or substantially equal to any one of, or between any two of: 10, 15, 20, 25, 30, 35, 40, 45, 50, 55, 60, 65, 70, 75, or 80 degrees.

While laminae 162a-162g each include unidirectional or woven fibers 174, some of the present laminates can include non-woven lamina(e). Furthermore, some of the present laminates can include lamina(e) having discontinuous or short fibers. The present laminates can be formed from layups that include any of the laminae described above, which can be stacked in any suitable order, such as, for example, a symmetrical order or an asymmetrical order.

Referring now to FIGs. 19A-21C, shown therein are illustrative examples of connecting portions. As shown, connecting portion 154 extends from sidewall 42 and to an edge 206. Edge 206 of connecting portion 154 extends over a first face 210 and/or over a second face 214 of insert 150 (opposite the first face) to secure the insert to frame 146. For clarity, connecting portion 154 does not include and is not defined by any molding flash of housing 10a.

For at least one of corners 58, a minimum distance 218 that connecting portion 154 extends between sidewall 42 and edge 206 (e.g., measured parallel to third direction 110) increases from first sidewall portion 66 to corner portion 62 and decreases from the corner portion to second sidewall portion 70. For example, distance 218 between sidewall 42 and edge 206 increases by at least 200% (e.g., 250, 300, 350, 400% or more) from first sidewall portion 66 to corner portion 62. For further example, distance 218 between sidewall 42 and edge 206 decreases by at least 200% (e.g., 250, 300, 350, 400% or more) from corner portion 62 to second sidewall portion 70. Referring specifically to FIGs. 19A-19C, for at least one of corners 58, connecting portion 154 defines a protrusion 222, such as, for example, a rib (as shown), tab, clip, and the like, that extends from sidewall 42 and over first face 210 and/or second face 214 of insert 150.

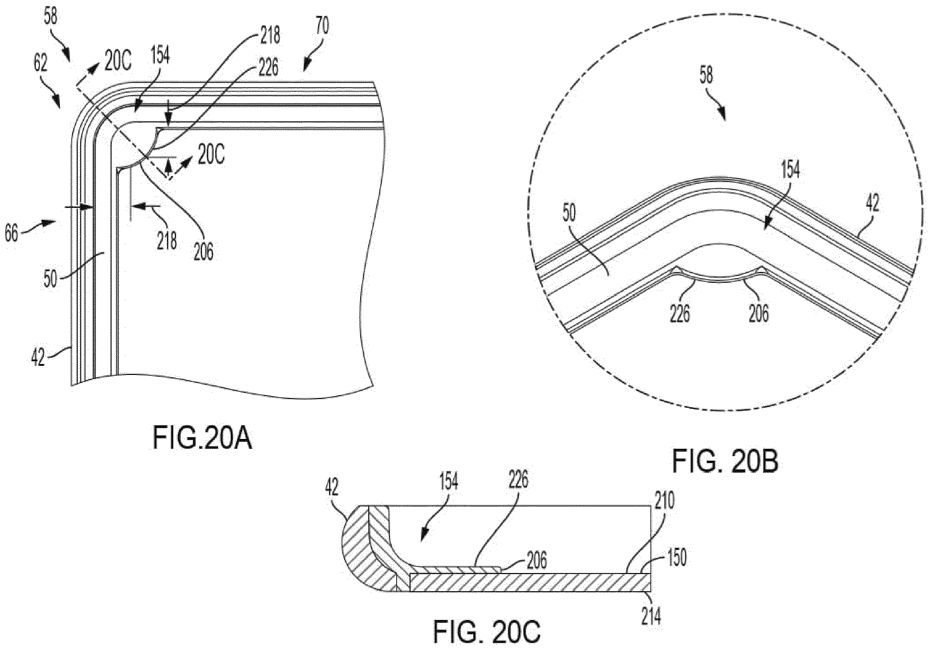

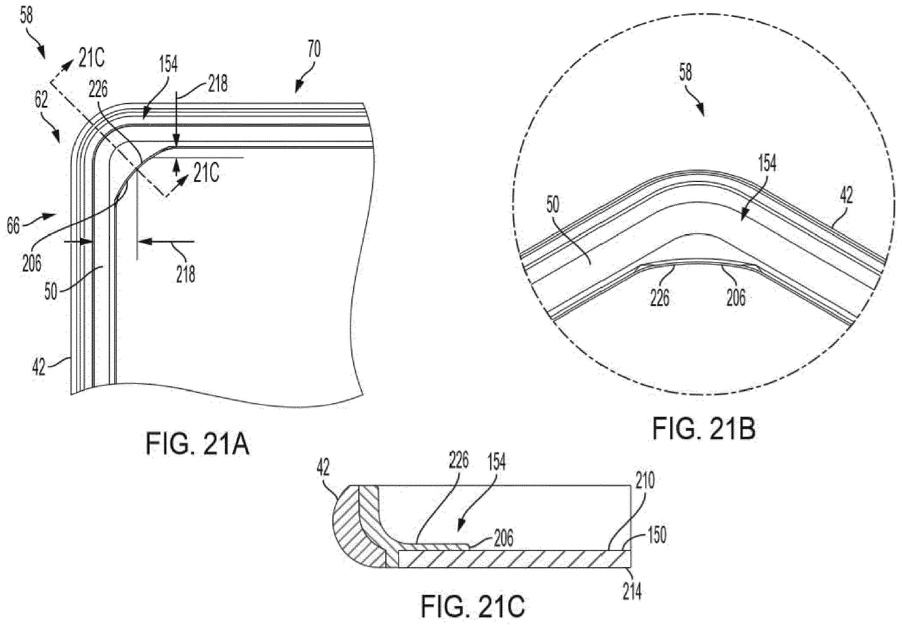

Referring additionally to FIGs. 20A-20C and 21A-21C, for at least one of corners 58, connecting portion 154 defines a rounded projection 226 that extends from sidewall 42 and over first face 210 and/or second face 214 of insert 150. To illustrate, for example, in FIGs. 20A-20C, edge 206 of at least one connecting portion 154 defines a convex shape. To further illustrate, in FIGs. 21A-21C, edge 206 of at least one connecting portion defines a concave shape. As shown in FIGs. 19A, 20A, and 21A, distance 218 can reach a maximum at a midpoint along connecting portion 154 between first sidewall portion 66 and second sidewall portion 70 to secure insert 150 to planar portion 18.

For added protection, the present housings (e.g., 10, 10a) can include a reinforcement rim configured to be disposed alongside at least a portion of sidewall 42. The rim can comprise any suitable material configured to increase the structural integrity of the present housings. For example, the rim can comprise metal (e.g., steel, aluminum, and/or the like), a laminate (e.g., 158), and/or any combination thereof. In some embodiments, the rim can be positioned on an outer surface (e.g., 54, such that the rim covers at least a majority, up to and including all of, the outer surface) or an inner surface (e.g., 50) of a sidewall (e.g., 42).

Some of the present PED housings comprise: a body including a planar portion comprising a periphery, a sidewall that projects from the periphery to define one or more corners, in each of which a linear first portion of the sidewall is disposed along the periphery in a first direction, a linear second portion of the sidewall is disposed along the periphery in a second direction that is coplanar with and angularly disposed relative to the first direction, and a corner portion of the sidewall connects the first and second sidewall portions, and, for each of at least one of the one or more corners, a corner brace disposed inside of the corner and connected to each of the first sidewall portion, the second sidewall portion, and the planar portion, wherein the height of the corner brace, measured perpendicularly to the planar portion, decreases along a third direction that is coplanar with and equiangularly disposed relative to the first and second directions.

In some housings, for each of at least one of the one or more corners, the height of the corner brace, measured perpendicularly to the planar portion, decreases and then increases along a fourth direction that is coplanar with and perpendicular to the third direction. In some housings, for each of at least one of the one or more corners, the outer surface of the corner brace that is opposite the planar portion is concave. In some housings, for each of at least one of the one or more corners, the outer surface of the corner brace that is opposite the planar portion is stepped.

Some of the present PED housings comprise: a body including a rectangular planar portion comprising a periphery, a sidewall that projects from the periphery to define four corners, in each of which a linear first portion of the sidewall is disposed along the periphery in a first direction, a linear second portion of the sidewall is disposed along the periphery in a second direction that is coplanar with and angularly disposed relative to the first direction, and a corner portion of the sidewall connects the first and second sidewall portions, and, for each of at least two of the corners, a corner brace disposed inside of the corner and connected to each of the first and second sidewall portions.

In some housings, for each of at least one of the corners, the body includes first and second corner braces, each disposed inside of the corner and connected to each of the first and second sidewall portions, and the first and second corner braces are spaced from one another in a third direction that is perpendicular to the planar portion.

In some housings, for each of at least one of the corner(s), the corner brace defines one or more openings. In some housings, at least one of the one or more openings includes a perimeter, taken parallel to the planar portion, that is circular or polygonal. Some housings include an elastomeric material disposed within at least one of the one or more openings.

In some housings, for each of at least one of the corner(s), the corner brace is unitary with the first and second sidewall portions.

Some PED housings comprise: an inert including a first face and a second face that is opposite the first face, and a frame coupled to the insert, the frame including a sidewall that defines one or more corners, in each of which a linear first portion of the sidewall extends in a first direction, a linear second portion of the sidewall extends in a second direction that is coplanar with and angularly disposed relative to the first direction, and a corner portion of the sidewall connects the first and second sidewall portions, and a connecting portion connecting the sidewall and the insert, the connecting portion extending from the sidewall, over the first face and/or the second face of the insert, and to an edge of the connecting portion, wherein at each of at least one of the one or more corners, a minimum distance that the connecting portion extends between the sidewall and the edge increases from the first portion to the corner portion and decreases from the corner portion to the second portion. In some housings, the insert comprises a laminate including one or more laminae, each comprising fibers dispersed within a matrix material.

In some housings, at each of at least one of the one or more corners, a minimum distance between the sidewall and the edge increases by at least 200% from the first portion to the corner portion and decreases by at least 200% from the corner portion to the second portion. In some housings, the connecting portion does not include any molding flash of the PED housing.

In some housings, at each of at least one of the one or more corners, the connecting portion defines a rib that extends from the sidewall and over the first face and/or the second face of the insert.

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the methods and systems are not intended to be limited to the particular forms disclosed. Rather, they include all modifications and alternatives falling within the scope of the claims, and embodiments other than the one shown may include some or all of the features of the depicted embodiment. For example, elements may be omitted or combined as a unitary structure, and/or connections may be substituted. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several embodiments.

The claims are not intended to include, and should not be interpreted to include, means-plus- or step-plus-function limitations, unless such a limitation is explicitly recited in a given claim using the phrase(s) "means for" or "step for," respectively.

## Claims

1. A portable electronic device (PED) housing comprising:
a body including:
a planar portion comprising a periphery;
a sidewall that projects from the periphery to define one or more corners, in each of which:
a linear first portion of the sidewall is disposed along the periphery in a first direction;
a linear second portion of the sidewall is disposed along the periphery in a second direction that is coplanar with and angularly disposed relative to the first direction; and
a corner portion of the sidewall connects the first and second sidewall portions; and
for each of at least one of the one or more corners:
a corner brace disposed inside of the corner and connected to each of the first sidewall portion, the second sidewall portion, and the planar portion;
wherein the height of the corner brace, measured perpendicularly to the planar portion, decreases along a third direction that is coplanar with and equiangularly disposed relative to the first and second directions.

2. The PED housing of claim 1, wherein, for each of at least one of the one or more corners, the height of the corner brace, measured perpendicularly to the planar portion, decreases and then increases along a fourth direction that is coplanar with and perpendicular to the third direction.

3. The PED housing of claim 1 or 2, wherein, for each of at least one of the one or more corners, the outer surface of the corner brace that is opposite the planar portion is concave.

4. The PED housing of any of claims 1-3, wherein, for each of at least one of the one or more corners, the outer surface of the corner brace that is opposite the planar portion is stepped.

5. A portable electronic device (PED) housing comprising:
a body including:
a rectangular planar portion comprising a periphery;
a sidewall that projects from the periphery to define four corners, in each of which:
a linear first portion of the sidewall is disposed along the periphery in a first direction;
a linear second portion of the sidewall is disposed along the periphery in a second direction that is coplanar with and angularly disposed relative to the first direction; and
a corner portion of the sidewall connects the first and second sidewall portions; and
for each of at least two of the corners, a corner brace disposed inside of the corner and connected to each of the first and second sidewall portions.

6. The PED housing of any of claims 1-5, wherein, for each of at least one of the corner(s), the corner brace defines one or more openings.

7. The PED housing of claim 6, wherein at least one of the one or more openings includes a perimeter, taken parallel to the planar portion, that is circular or polygonal.

8. The PED housing of claim 6 or 7, comprising an elastomeric material disposed within at least one of the one or more openings.

9. The PED housing of any of claims 1-8, wherein, for each of at least one of the corner(s), the corner brace is unitary with the first and second sidewall portions.

10. The PED housing of claim 5, wherein, for each of at least one of the corners:
the body includes first and second corner braces, each disposed inside of the corner and connected to each of the first and second sidewall portions; and
the first and second corner braces are spaced from one another in a third direction that is perpendicular to the planar portion.

11. A portable electronic device (PED) housing comprising:
an insert including:
a first face; and
a second face that is opposite the first face; and
a frame coupled to the insert, the frame including:
a sidewall that defines one or more corners, in each of which:
a linear first portion of the sidewall extends in a first direction;
a linear second portion of the sidewall extends in a second direction that is coplanar with and angularly disposed relative to the first direction; and
a corner portion of the sidewall connects the first and second sidewall portions; and
a connecting portion connecting the sidewall and the insert, the connecting portion extending from the sidewall, over the first face and/or the second face of the insert, and to an edge of the connecting portion;
wherein, at each of at least one of the one or more corners, a minimum distance that the connecting portion extends between the sidewall and the edge:
increases from the first portion to the corner portion; and
decreases from the corner portion to the second portion.

12. The PED housing of claim 11, wherein, at each of at least one of the one or more corners, a minimum distance between the sidewall and the edge:
increases by at least 200% from the first portion to the corner portion; and
decreases by at least 200% from the corner portion to the second portion.

13. The PED housing of claim 11 or 12, wherein, at each of at least one of the one or more corners, the connecting portion defines a rib that extends from the sidewall and over the first face and/or the second face of the insert.

14. The PED housing of any of claims 11-13, wherein the connecting portion does not include any molding flash of the PED housing.

15. The PED housing of any of claims 11-14, wherein the insert comprises a laminate having one or more laminae, each comprising fibers dispersed within a matrix material.
